(19) Europäisches Patentamt
European Patent Office
Office européen des brevets

(11) Veröffentlichungsnummer: **0 259 652**
**B1**

# (12) EUROPÄISCHE PATENTSCHRIFT

(45) Veröffentlichungstag der Patentschrift: **06.12.89**

(51) Int. Cl.⁴: **C08F 8/32,** C03C 17/32

(21) Anmeldenummer: **87111877.4**

(22) Anmeldetag: **17.08.87**

## (54) Verwendung von modifiziertem Polyethylen zur Vergütung von Glasoberflächen.

(30) Priorität: **27.08.86 DE 3629167**

(43) Veröffentlichungstag der Anmeldung:
**16.03.88 Patentblatt 88/11**

(45) Bekanntmachung des Hinweises auf die Patenterteilung:
**06.12.89 Patentblatt 89/49**

(84) Benannte Vertragsstaaten:
**AT BE CH DE ES FR GB IT LI LU NL SE**

(56) Entgegenhaltungen:
**DE-A-1 495 137**
**FR-A-2 107 538**
**GB-A-1 021 696**

(73) Patentinhaber: **Th. Goldschmidt AG,**
**Goldschmidtstrasse 100 Postfach 101461,**
**D-4300 Essen 1(DE)**

(72) Erfinder: **Ruf, Erich, Dr., Auf'm Gartenstück 10,**
**D-4300 Essen(DE)**

**EP 0 259 652 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von modifiziertem Polyethylen zur Vergütung von Glasoberflächen, insbesondere der äußeren Oberfläche von Glasbehältern.

Die Erfindung betrifft insbesondere die Nachvergütung von Glasoberflächen, welche eine dünne Oberflächenschicht von Metalloxiden, z.B. Zinnoxiden, aufweisen (sogenannte Heißendvergütung), mit wäßrigen Dispersionen von modifiziertem Polyethylen (sogenannte Kaltendvergütung) zur Verbesserung der Glätte der Oberflächen und zur Erhöhung ihrer Kratzfestigkeit.

Die Festigkeit von Glas hängt von der Unversehrtheit der Glasoberfläche ab. Unmittelbar nach Herstellung des Glases ist seine Festigkeit am höchsten. Die Festigkeit sinkt jedoch, wenn die Glasoberfläche Kratzer oder Schrammen aufweist. Es sind deshalb zahlreiche Verfahren bekannt, die Oberfläche von Gegenständen aus Glas gegen mechanische Beschädigungen zu schützen.

So ist es bekannt, Glasgegenstände direkt nach ihrer Formgebung bei Temperaturen zwischen etwa 370 und 750°C mit anorganischen oder organischen Verbindungen des Titans, Zinns oder Zirkons, zu behandeln (sogenannte Heißendvergütung). Dabei entstehen auf der Oberfläche der heißvergüteten Glasgegenstände dünne, farblose, transparente Metalloxidüberzüge.

Zur weiteren Erhöhung der Ritzhärte, der Festigkeit und insbesondere der Glätte von Glasgegenständen ist es bekannt, auf die mit Metalloxiden vergüteten Glasgegenstände noch einen organischen Überzug aufzubringen.

Aus der umfangreichen Patentliteratur werden zum Stand der Technik folgende Patentschriften genannt:

In der DE-PS 12 91 448 ist ein Verfahren zur Erhöhung der Ritzhärte und Festigkeit von Glasgegenständen, insbesondere Glasflaschen, durch Erzeugung eines dünnen, farblosen, durchsichtigen Überzuges auf den Außenflächen der Glasgegenstände beschrieben, dessen Merkmal darin besteht, daß auf die Glasgegenstände aufgebrachte dünne Schichten eines pyrolysierbaren anorganischen Salzes oder einer pyrolysierbaren organischen Verbindung des Titans, Zirkoniums, Zinns oder Vanadiums auf den Glasgegenständen bei Temperaturen zwischen 370 und 705°C pyrolytisch zu den entsprechenden Metalloxiden zersetzt, die Glasgegenstände auf Temperaturen zwischen 230 und 65,5°C abgekühlt und auf die noch heißen Glasoberflächen ein Olefinpolymerisat, ein Polyurethan, ein Polystyrol oder ein Essigsäuresalz eines Alkylamins aufgesprüht werden. Beispiel eines Olefinpolymerisates ist ein Polyethylenwachs niedrigen Molekulargewichts, welches in Form einer wäßrigen Emulsion verwendet wird. Als Emulgator dient das Alkalimetallsalz einer Fettsäure, insbesondere Kaliumoleat. Die Dicke des Überzuges auf dem Glasgegenstand beträgt etwa 1 µm. Diese Filme aus Polyethylenwachs sind jedoch nicht waschlaugenbeständig und werden bei einer Reinigung des Behälters nach verhältnismäßig kurzer Zeit durch die waschaktiven Substanzen der heißen Reinigungsflotte abgelöst.

Aus der DE-PS 12 98 681 ist ein Verfahren zum Überziehen von Glasgegenständen mit einer verschleißfesten und gleitfähigen Schicht bekannt. Dieses Verfahren ist dadurch gekennzeichnet, daß auf die Oberfläche des Glasgegenstandes eine wäßrige Lösung aus einem Umsetzungsprodukt von Polyvinylalkohol, einem emulgierten Polyolefin, vorzugsweise emulgierten Polyethylen, und einer sauren Verbindung aufgebracht wird.

Die DE-PS 15 96 742 betrifft ein Verfahren zur Herstellung dauerhafter, glatter Überzüge auf Glaskörpern, bei dem der Überzug auf die auf 70 bis 225°C erwärmten Glaskörper aus einer Mischung eines dispergierten Polyolefins und eines Polyoxyethylenderivates einer Fettsäure aufgebracht wird. Das disperse Polyolefin ist vorzugsweise Polyethylen. Als Polyoxyethylenderivat einer Fettsäure wire vorzugsweise Polyoxyethylenmonostearat verwendet.

Aus der DE-PS 24 32 478 ist ein Glasbehälter mit einem Überzug aus einem ionischen Copolymer zwischen einem α-Olefin und einer α,β-ethylenischen ungesättigen Carbonsäure bekannt, wobei der Glasbehälter zusätzlich einen Gleitüberzug mit in Gewichtsteilen folgenden Bestandteilen aufweist:

1 Teil mindestens eines der folgenden Salze: Calciumstearat, Zinkstearat, Calciumoleat, Zinkoleat;
0,5 bis 2 Teile eines löslichen Polyvinylalkohols und 1,7 bis 3,6 Teile mindestens eines der folgenden Oleate: Kaliumoleat, Natriumoleat und Ammoniumoleat.

Aus der DE-OS 14 95 137 ist ein Verfahren zur Herstellung von modifizierten Polyolefinwachsen bekannt, bei dem man Sauerstoff enthaltende Polyolefinwachse, die einen Sauerstoffgehalt von 1 bis 10 Gew.-%, einen Peroxidgehalt von 0,001 bis 0,3 Gew.-% und eine Säurezahl von mindestens 1 aufweisen, mit Verbindungen umsetzt, die mindestens ein gegebenenfalls substituiertes Stickstoffatom aufweisen. Diese modifizierten Polyolefinwachse können Polyolefinen zugesetzt werden und verbessern deren Anfärbbarkeit. Die Brauchbarkeit derartig modifizierter Polyolefinwachse zur Oberflächenvergütung von Glasgegenständen konnte dieser Offenlegungsschrift weder entnommen werden, noch wurde diese überraschende Brauchbarkeit hierdurch nahegelegt.

Diese aus dem Stand der Technik bekannten Beschichtungsmaterialien sind jedoch noch nicht in der Lage, alle Anforderungen zu erfüllen, die an ein Überzugsmittel für Glasoberflächen zu stellen sind. Diese Überzüge müssen insbesondere folgende Forderungen erfüllen:

Die Überzüge sollen die Glasoberfläche wirksam vor mechanischen Beschädigungen schützen, wie sie beispielsweise auftreten, wenn die Glasbehälter bei der Reinigung, Abfüllung oder Verpackung aneinanderreiben oder mit Metallflächen der Reinigungs-, Abfüll- oder Verpakkungsmaschinen in reibende Berührung kommen.

Die Überzüge müssen eine größere Anzahl von Reinigungs-, und Waschvorgängen, z.B. in Spülmaschinen, überstehen. Die Überzüge müssen also

insbesondere gegen den Angriff heißer, wäßriger Waschflotten beständig sein.

Die Überzüge müssen einen guten Gleitwert aufweisen, damit die behandelten Glasbehälter gut handhabbar sind.

Die Überzüge sollen auf den Glasoberflächen möglichst gut haften, damit sie bei punktueller Beschädigung nicht ohne weiteres von der Glasoberfläche abgezogen werden können.

Etiketten, insbesondere Etiketten mit selbstklebender Beschichtung, müssen auf den Überzügen der Beschichtung ausreichend fest haften, damit die Etikettierfähigkeit der behandelten Glasbehälter gewährleistet bleibt.

Die Überzüge müssen physiologisch unbedenklich sein, da die Mehrzahl von derartige Überzüge aufweisenden Glasbehältern zur Verpackung von Lebensmitteln oder Getränken dient.

Schließlich sollen die Überzüge den Endpreis der behandelten Glaswaren nicht wesentlich erhöhen.

Der Erfindung liegt die Aufgabe zugrunde, ein Überzugsmittel zu finden, welches die vorstehend genannten Anforderungen möglichst optimal erfüllt. Dabei soll das Überzugsmittel vorzugsweise in Form einer wäßrigen Dispersion auf die Glasoberfläche aufgebracht werden können. Vorzugsweise soll das Überzugsmittel auf Glasbehälter aufgebracht werden, welche zuvor mit metallorganischen Verbindungen unter Ausbildung einer Metalloxidschicht heißvergütet worden sind und noch eine Temperatur von etwa 50 bis 150°C aufweisen (Kaltendvergütung).

Überraschend wurde nun gefunden, daß ein in bestimmter Weise modifiziertes Polyethylen Überzüge des gewünschten Eigenschaftsprofiles herzustellen gestattet.

Gegenstand der Erfindung ist deshalb die Verwendung von modifiziertem Polyethylen eines mittleren Molekulargewichtes von 500 bis 10 000 mit einer oder mehreren seitenständig gebundenen Gruppe(n) der Formel

$$-CONH(CH_2)_nNR^1R^2 \quad I$$

wobei $R^1$ und $R^2$ gleich oder verschieden sind und eine niedere Alkylgruppe mit 1 bis 4 Kohlenstoffatomen bedeuten und n = 2 oder 3 ist, oder deren Salzen mit aliphatischen Carbonsäuren mit 1 bis 3 Kohlenstoffatomen, vorzugsweise in Form einer wäßrigen Dispersion, zur Vergütung von Glasoberflächen, insbesondere der äußeren Oberfläche von Glasbehältern.

Vorzugsweise weist das modifizierte Polyethylen ein mittleres Molekulargewicht von 1000 bis 5000 auf. Das durchschnittliche polymere Molekül soll dabei 1 bis 10, vorzugsweise 1 bis 5 seitenständig gebundene Gruppen der Formel I aufweisen.

Die Reste $R^1$ und $R^2$ können gleich oder verschieden sein. Sie sind aber vorzugsweise gleich. Sie können eine Methyl-, Ethyl-, Propyl-, Isopropyl-, Butyl- oder Isobutylgruppe bedeuten. Vorzugsweise haben $R^1$ und $R^2$ jeweils die Bedeutung einer Methylgruppe.

Der Index n ist vorzugsweise = 3.

Das Polyethylen weist vorzugsweise 1 bis 10 seitenständig gebundene Gruppen der Formel I auf.

Als aliphatische Carbonsäure dient vorzugsweise Essigsäure, jedoch sind auch Ameisensäure oder Propionsäure brauchbar.

Die Herstellung des erfindungsgemäß zu verwendenden modifizierten Polyethylens ist in der DE-OS 14 95 137 beschrieben und erfolgt somit entsprechend dem Stand der Technik durch Umsetzung von anoxidiertem Polyethylen mit Dialkylaminen der Formel $H_2N(CH_2)_nNR^1R^2$, wobei die Reste $R^1$ und $R^2$ und der Index n wie oben angegeben definiert sind.

Vorzugsweise wird für die Modifizierung ein anoxidiertes und gegebenenfalls verestertes Polyethylen mit einer Säurezahl von 20 bis 40, insbesondere von 20 bis 30, und einer Verseifungszahl von 20 bis 70, insbesondere von 40 bis 60, verwendet.

Das erfindungsgemäß zu verwendende modifizierte Polyethylen ergibt auf Glasoberflächen glatte Überzüge mit hervorragenden Gleitwerten. Die Überzüge haften ausgezeichnet auf Glasoberflächen und sind deshalb besonders zur Nachvergütung von Altflaschen (Mehrwegflaschen) geeignet.

Die Überzüge sind gegen mehrfache Einwirkung heißer wäßriger Waschflotten stabil und behalten insbesondere ihre Glätte.

Die mit den Überzügen versehenen Glasbehälter können in üblicher Weise etikettiert werden.

Die besondere Glättewirkung des erfindungsgemäß zu verwendenden modifizierten Polyethylens zeigt sich auch darin, daß Glasbehälter mit einer vorhandenen Heißendvergütung nach Eintauchen in auf Raumtemperatur befindliche Polyethylendispersionen bzw. nach Aufsprühen solcher Dispersionen auf Glasbehälter, auch in nassem Zustand bzw. bei Einwirkung von Kondenswasser auf die beschichteten Glasoberflächen, noch eine gute Glättewirkung aufweisen, was bei anderen Kaltendvergütungsmittlen auf Basis nichtmodifizierten Polyethylens erst nach Antrocknen solcher Schichten der Fall ist.

Das erfindungsgemäß zu verwendende modifizierte Polyethylen wird zur Bildung des Überzüges in der Regel in Form einer wäßrigen Dispersion auf die Glasoberfläche aufgebracht und auf dieser getrocknet. Das Aufbringen der Polyethylendispersion erfolgt meist im Anschluß an eine Heißendvergütung unter Ausnutzung der Restwärme der zu vergütenden Glasbehälter bei einer Glastemperatur von 50 bis 150°C. Die Dispersion wird dabei auf die Oberfläche gesprüht. Es ist auch möglich, die Glasbehälter in die Dispersion einzutauchen.

Zur Herstellung geeigneter Dispersionen des modifizierten Polyethylens kann man die aus dem Stand der Technik bekannten Dispergierhilfsmittel verwenden. Geeignete Dispergierhilfsmittel sind z.B. wasserlösliche Anlagerungsprodukte von Ethylenoxid an Fettalkohole oder Alkylphenole.

Als besonders brauchbar haben sich als Dispergierhilfsmittel jedoch solche grenzflächenaktiven Verbindungen erwiesen, welche als hydrophile Gruppen Betain- oder Aminoxidgruppen und als hydrophobe Gruppen langkettige Alkylreste aufweisen.

Beispiel eines solchen geeigneten Betains ist eine Verbindung der allgemeinen Formel

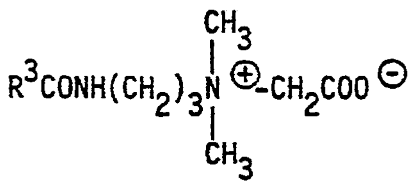

II

wobei $R^3$ ein langkettiger, von einer Fettsäure abgeleiteter Alkylrest mit im Mittel 7 bis 17 Kohlenstoffatomen ist.

In ähnlicher Weise eignet sich als Dispergierhilfsmittel ein Aminoxid der folgenden allgemeinen Formel

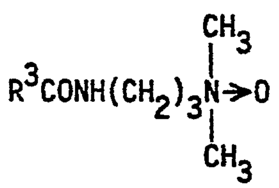

III

$R^3$ ist dabei wie oben definiert.

Derartige Betaine und Aminoxide sind aus dem Stand der Technik bekannt.

Zur Herstellung der Dispersionen wird das erfindungsgemäß modifizierte Polyethylen aufgeschmolzen, das Dispergierhilfsmittel oder das Dispergierhilfsmittelgemisch wird zweckmäßig in der wäßrigen Phase gelöst oder gleichmäßig verteilt. Die Schmelze des modifizierten Polyethylens wird unter intensivem Rühren in das auf 60 bis 95°C erwärmte Wasser gegeben. Es empfiehlt sich, die erhaltene Dispersion langsam unter Rühren abzukühlen, wobei zweckmäßig eine Abkühlungsgeschwindigkeit von etwa 1 bis 3°C/Min. eingehalten werden sollte.

Die unter Verwendung der Betaine der Formel II bzw. der Aminoxide der Formel III hergestellten Dispersionen sind gegenüber den Härtebildnern des Wassers unempfindlich.

Für die Vergütung von Glasoberflächen kann die Dispersion direkt oder gegebenenfalls nach Verdünnen auf 0,1 Gew.-% Polyethylen verwendet werden.

In dem folgenden Beispiel wird die Herstellung des modifizierten Polyethylens, die Zubereitung einer wäßrigen Dispersion dieses modifizierten Polyethylens und die Verwendung dieser Dispersion für die Kaltendvergütung gezeigt.

In einem 2-l-Vierhalskolben mit Rührer, Thermometer, Destillationsbrücke, Vorlage und Tropftrichter werden 800 g eines Polyethylenwachses mit einer Verseifungszahl von ca. 40 bis 60 aufgeschmolzen und bei einer Temperatur von 120°C über einen Tropftrichter mit 100 g Dimethylaminopropylamin zügig unter Rühren versetzt.

Im Anschluß daran wird die Reaktionsmischung unter Rühren ca. 4 bis 5 Stunden auf ca. 170°C erhitzt. Anschließend werden unter Wasserstrahlvakuum unter weiterem Rühren (Produkttemperatur ca. 170°C) aus der Umsetzung erhaltenes Reaktionswasser bzw. Alkohol und überschüssiges Amin abdestilliert. Es werden ca. 874 g amidopropyldimethylaminogruppenhaltiges Polyethylen erhalten.

71,5 g dieses erfindungsgemäß modifizierten, amidopropyldimethylaminogruppenhaltigen Polyethylens werden auf ca. 145°C erwärmt und in flüssiger Form in einen Tropftrichter gegeben. Der Tropftrichter mündet in ein Emulgiergefäß, welches mit Rührer, Thermometer und Rückflußkühler versehen ist. In dem Emulgiergefäß befindet sich eine 95°C warme Mischung, bestehend aus 376,6 g Wasser, 12,5 g einer 35 %igen wäßrigen Lösung von Kokosfettsäureamidopropyldimethylaminoxid und 39,4 g eines Kokosfettamins, an welches 50 Mol Ethylenoxid angelagert worden sind und welches in Form des Acetates vorliegt. Das heiße Polyethylen wird in diese Mischung eingetropft, wobei intensiv gerührt wird (erfindungsgemäße Dispersion 1).

In gleicher Weise wird eine zweite Dispersion hergestellt. Hierzu werden 71,5 g des erfindungsgemäß modifizierten Polyethylens auf ca. 140°C erwärmt und in den Tropftrichter gegeben. In dem bereits beschriebenen Emulgiergefäß befinden sich 363,5 g Wasser, 60,0 g einer 30 %igen wäßrigen Lösung von Kokosfettsäureamidopropylbetain und 5 g Essigsäure. Das Gemisch wird auf 90°C erwärmt. Das 140°C heiße modifizierte Polyethylen wird in die wäßrige Lösung eingerührt. Man läßt die Dispersion unter gutem Rühren abkühlen und hält dabei eine Abkühlungsgeschwindigkeit von etwa 2°C/Min. ein (erfindungsgemäße Dispersion 2).

Zur Durchführung der Vergleichsversuche werden nasse, auf Raumtemperatur befindliche Bierflaschen, die eine Heißendvergütung von 50 ctu (coating thickness unit) ($\equiv 1{,}25 \times 10^{-6}$ cm) aufweisen, eingesetzt.

Als Vergleich dient eine Polyethylendispersion des Standes der Technik:

Anoxidiertes Polyethylen mit einer Verseifungszahl von 40 bis 50 wird mit einem nichtionogenen Emulgator aufgeschmolzen und mit heißem Wasser dispergiert. Die Dispersion enthält 24 % Festkörper.

Die erfindungsgemäßen Dispersionen 1 und 2 und die Vergleichsdispersion werden für die Anwendung mit deionisiertem Wasser im Verhältnis 1 : 50 verdünnt. In diese Dispersion werden die auf Raumtemperatur befindlichen Bierflaschen voll eingetaucht und sofort wieder herausgezogen. Danach werden a) ohne weitere Nachbehandlung und b) nach Abspülen mit Wasser jeweils Scratch-Testwerte mit Hilfe eines Scratch Resistance Testers bestimmt. Es werden folgende Werte gemessen:

Dispersion mit unmodifiziertem Polyethylen:

a) ohne Nachbehandlung:1 bis 2 kg
b) nach Abspülen mit Wasser:1 kg

Dispersion 1 mit erfindungsgemäß modifiziertem Polyethylen:

a) ohne Nachbehandlung:> 25 kg
b) nach Abspülen mit Wasser:15 kg

Dispersion 2 mit erfindungsgemäß modifiziertem Polyethylen:

a) ohne Nachbehandlung:> 25 kg
b) nach Abspülen mit Wasser:20 kg

Diese praxisnah durchgeführten Versuche zeigen, daß das erfindungsgemäß modifizierte Polyethylen eine Naßvergütung von Glasflaschen ermöglicht und die vergütete Glasoberfläche 25fach höhere Belastung ohne Ausbildung von Kratzern oder anderen Oberflächendefekten aushält.

**Patentansprüche**

Verwendung von modifiziertem Polyethylen eines mittleren Molekulargewichtes von 500 bis 10 000 mit einer oder mehreren seitenständig gebundenen Gruppe(n) der Formel

$$-CONH(CH_2)_nNR^1R^2$$

wobei $R^1$ und $R^2$ gleich oder verschieden sind und eine niedere Alkylgruppe mit 1 bis 4 Kohlenstoffatomen bedeuten und n = 2 oder 3 ist, oder deren Salzen mit aliphatischen Carbonsäuren mit 1 bis 3 Kohlenstoffatomen, vorzugsweise in Form einer wäßrigen Dispersion, zur Vergütung von Glasoberflächen, insbesondere der äußeren Oberfläche von Glasbehältern.

**Claims**

1. Use, preferably in the form of an aqueous dispersion, of modified polyethylene with an average molecular weight from 500 to 10,000 having one or more group(s), bonded in lateral positions, of the formula

$$-CONH(CH_2)_nNR^1R^2$$

in which $R^1$ and $R^2$ are identical or different and denote a lower alkyl group having 1 to 4 carbon atoms and n is = 2 or 3, or salts thereof with aliphatic carboxylic acids having 1 to 3 carbon atoms, for the coating of glass surfaces, particularly of the external surface of glass vessels.

**Revendications**

Utilisation d'un polyéthylène modifié ayant une masse moléculaire moyenne de 500 à 10 000, avec un ou plusieurs groupes à liaison latérale de formule

$$-CONH(CH_2)_nNR^1R^2$$

dans laquelle $R^1$ et $R^2$ sont identiques ou différents et représentent chacun un groupe alkyle inférieur ayant de 1 à 4 atomes de carbone, et n = 2 ou 3, ou de leurs sels avec des acides carboxyliques aliphatiques ayant de 1 à 3 atomes de carbone, de préférence sous forme d'une dispersion aqueuse, pour le revêtement de surfaces de verre, en particulier de la surface extérieure de récipients en verre.